# DEMANDE DE BREVET EUROPEEN

(11) **EP 0 994 499 A1**
(43) Date de publication de la demande: **19.04.2000**
(21) Numéro de dépôt: 99402432.1
(22) Date de dépôt: 04.10.1999
(51) Int. Cl.: H01H 47/32, H02M 3/158

(54) **Dispositif électronique d'alimentation pour appareil interrupteur électromagnétique**

(30) Priorité: 15.10.1998 FR 9813098
(71) Demandeur: Schneider Electric Industries SA, 92100 Boulogne Billancourt (FR)
(72) Inventeur: Benkaroun, Karim, 78500 Sartrouville (FR); Gousset, Alain, 92000 Nanterre (FR); Guibert, Philippe, 78400 Chatou (FR)

(57) **Abrégé**

La présente invention conceme un dispositif électronique d'alimentation d'une bobine de commande (Ba) d'appareil interrupteur électromagnétique, comprenant un interrupteur électronique hacheur (Ts) disposé en série avec la bobine (Ba) et piloté par un circuit contrôleur (CC) à modulation de largeur d'impulsions, caractérisé par le fait que la bobine de commande (Ba) est associée à une seconde bobine auxiliaire (Bd, Be) et à un condensateur d'alimentation (Cd) au sein d'un circuit d'alimentation (A) qui fait fonction soit de hacheur abaisseur de tension soit de hacheur élévateur de tension.

## Description

La présente invention concerne un dispositif électronique d'alimentation d'une bobine de commande d'appareil interrupteur électromagnétique, ce dispositif comprenant un interrupteur électronique hacheur disposé en série avec la bobine et piloté par un circuit contrôleur à modulation de largeur d'impulsions.

On alimente la bobine de commande d'un appareil interrupteur électromagnétique d'abord avec un courant élevé dit d'appel afin de fermer le circuit magnétique de l'électroaimant, puis avec un courant réduit dit de maintien juste nécessaire pour maintenir ce circuit magnétique fermé. Il est connu d'utiliser un hacheur à modulation de largeur d'impulsions pour alimenter cette bobine.

Dans un tel appareil, on cherche parfois à obtenir une ouverture rapide du circuit magnétique de l'électroaimant. Or le courant de roue libre qui continue de circuler dans la bobine via la diode de récupération après le blocage de l'interrupteur hacheur retarde cette ouverture. On interpose donc de façon connue en série avec la bobine un interrupteur dit d'ouverture rapide ou de retombée rapide, sollicité par un circuit d'ouverture.

L'invention a pour but de commander l'appareil à partir d'une alimentation alternative ou continue à bas voltage (à titre indicatif du 12 volts) et régulée. Le fonctionnement diffère peu que l'alimentation soit à courant alternatif ou à courant continu.

Le dispositif selon l'invention est caractérisé par le fait que la bobine de commande est associée à une seconde bobine auxiliaire et à un condensateur d'alimentation au sein d'un circuit d'alimentation qui fait fonction soit de hacheur abaisseur de tension soit de hacheur élévateur de tension.

Selon une caractéristique, la seconde bobine fait partie d'un dispositif de déclenchement de l'appareil.

L'invention va maintenant être décrite avec plus de détail en se référant à des modes de réalisation donnés à titre d'exemples et représentés par les dessins annexés sur lesquels :
- la figure 1 est un schéma d'un appareil électromagnétique utilisant le dispositif électronique d'alimentation de bobine conforme à l'invention;
- la figure 2 montre un schéma du dispositif d'alimentation de bobine selon l'invention;
- la figure 3 est une variante de la figure 2 ;
- la figure 4 est un diagramme illustrant le fonctionnement du dispositif.

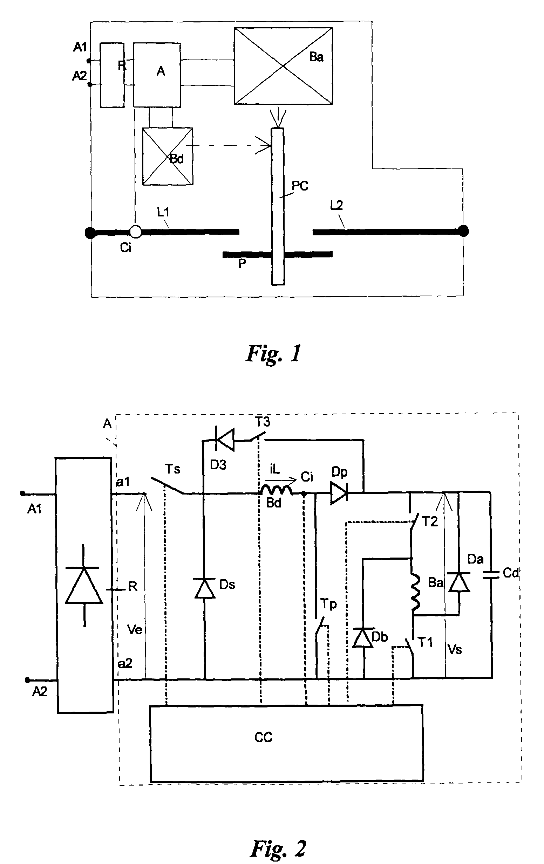

Le dispositif électronique selon l'invention repéré A dans son ensemble est alimente et contrôle une bobine de commande Ba intégrée à un électroaimant (ci-après dite bobine moteur) et une bobine de déclencheur Bd, dans un appareil interrupteur électromagnétique illustré à la figure 1. Cet appareil, par exemple de type contacteur électromagnétique ou de type contacteur-disjoncteur, comprend des pôles de coupure P contrôlant l'alimentation de puissance sur des chemins L1, L2 et actionnés par l'électroaimant et sa bobine de commande Ba.

Un redresseur R (pont de diodes) reçoit, sur des bornes A1 et A2, du courant continu ou du courant alternatif et fournit sur deux sorties a1 et a2, respectivement, du courant continu ou du courant alternatif redressé. La tension de sortie du pont R est repérée Ve entre les bornes a1 et a2.

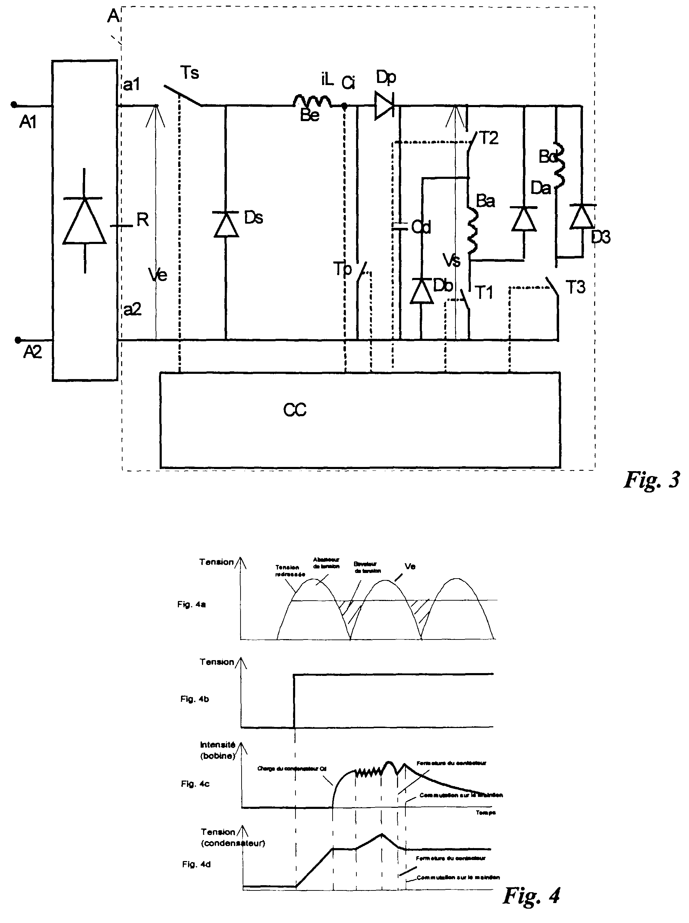

La bobine de commande Ba agit sur un pont de contact PC commandant la fermeture ou l'ouverture des pôles. La bobine Bd fait partie d'un dispositif de déclenchement et agit alors sur le pont de contact PC ou constitue simplement une bobine faisant office de self. Les bobines Ba et Bd sont alimentées en sortie des bornes a1 et a2. Dans le mode de réalisation de la figure 2, la bobine Bd est en série avec la bobine Ba. Dans le mode de réalisation de la figure 3, en plus des bobines Ba et Bd, une self Be est en série avec la bobine Ba.

Un condensateur d'alimentation Cd est monté en parallèle sur la bobine Ba.

Le circuit d'alimentation A fonctionne soit en hacheur série (montage abaisseur de tension) soit en hacheur parallèle (montage élévateur de tension).

Un interrupteur de hachage Ts est monté en série avec les bobines Ba, Bd ou Be sur la sortie a1. Le courant iL sortant de la bobine Bd (figure 2) ou Be (figure 3) est envoyé sur la bobine Ba et le condensateur Cd en passant par une diode Dp.

Un premier interrupteur T1 servant à contrôler la retombée rapide est monté en série avec la bobine de commande Ba , entre celle-ci et la borne a2. Un second interrupteur T2 est monté en série avec la bobine Ba et sert à contrôler la commutation appel-maintien.

Une diode de roue libre Da est montée en parallèle avec la bobine de commande Ba et l'interrupteur T2. Une autre diode de roue libre Db est montée en parallèle aux bornes de l'interrupteur T1 et de la bobine de commande Ba.

Une diode de roue libre Ds est montée aux bornes de a1, a2. On reconnaît avec l'interrupteur Ts, la diode Ds, la bobine Bd ou Be, le condensateur Cd, un montage « hacheur série » (abaisseur de tension).

Un interrupteur de hachage Tp est monté en parallèle avec la bobine Ba et le condensateur Cd. On reconnaît avec la bobine Bd, l'interrupteur Tp et la diode Dp, un montage « hacheur parallèle » (élévateur de tension).

Par ailleurs un troisième interrupteur T3 est monté en série avec la bobine Bd et le transistor Tp (figure 2) ou en série avec la bobine Bd (figure 3). Il coopère avec une diode D3.

Les interrupteurs Ts, Tp, T1, T2, T3 sont pilotés par un circuit à modulation de largeur d'impulsions intégré à un circuit contrôleur CC. Ces interrupteurs Ts, Tp, T1, T2, T3 sont par exemple des transistors MOS ou bipolaires. Les composants du circuit contrôleur CC sont usuels et ne seront pas davantage décrits. Un capteur Ci mesurant le courant iL passant par la bobine Bd ou Be est relié au circuit contrôleur CC.

Le fonctionnement du dispositif va maintenant être décrit:

A la mise sous tension, la tension Vs aux bornes du condensateur Cd est nulle.

Pour abaisser la tension (se référer à la figure 4), l'interrupteur de hachage Ts est utilisé. Il est fermé pendant une fraction de chacune des périodes de découpage. Les interrupteurs T1 et T3 sont alors ouverts de même que l'interrupteur de hachage Tp. Lors du blocage de l'interrupteur Ts, la diode de roue libre Ds assure la continuité du courant et la décharge de la bobine Bd dans la bobine de commande Ba. La tension Vs aux bornes de la bobine de commande Ba est inférieure à la tension d'alimentation Ve.

Pour éléver la tension (se référer à la figure 4), l'interrupteur de hachage Tp est utilisé. Il est fermé pendant une fraction de chacune des périodes de découpage. Les interrupteurs T1 et T3 sont alors ouverts et l'interrupteur de hachage Ts est fermé. Le blocage de Tp entraîne la décharge de l'inductance Bd dans la bobine Ba. La tension Vs aux bornes de la bobine de commande Ba est supérieure à la tension d'alimentation Ve.

La charge de la capacité Cd s'effectue de manière que le courant iL mesuré par le capteur Ci soit compris dans une fourchette.

Si la tension aux bornes du condensateur Cd est insuffisante, le dispositif réalise une « élévation de tension ». Le hachage de l'interrupteur Tp reste fonction de la mesure du courant par le capteur Ci. Cette phase élévation de tension se termine quand la tension Vs dépasse la valeur souhaitée.

La tension aux bornes du condensateur Cd sert de contre-tension pour la retombée rapide.

La commutation entre l'appel et le maintien est contrôlée par l'interrupteur T2.

Le déclenchement est contrôlé par la fermeture de l'interrupteur T3, les interrupteurs T1, T2, Ts étant ouverts et l'interrupteur Tp fermé.

Il est bien entendu que l'on peut sans sortir du cadre de l'invention imaginer des variantes et des perfectionnements de détail et de même envisager l'emploi de moyens équivalents.

## Revendications

1. Dispositif électronique d'alimentation d'une bobine de commande (Ba) d'appareil interrupteur électromagnétique, comprenant un interrupteur électronique hacheur (Ts) disposé en série avec la bobine (Ba) et piloté par un circuit contrôleur (CC) à modulation de largeur d'impulsions, caractérisé par le fait que la bobine de commande (Ba) est associée à une seconde bobine auxiliaire (Bd, Be) et à un condensateur d'alimentation (Cd) au sein d'un circuit d'alimentation (A) qui fait fonction soit de hacheur abaisseur de tension soit de hacheur élévateur de tension.

2. Dispositif selon la revendication 1, caractérisé par le fait que la seconde bobine (Bd) fait partie d'un dispositif de déclenchement de l'appareil.

3. Dispositif selon l'une quelconque des revendications précédentes, caractérisé par le fait qu'il comporte d'une part un interrupteur de hachage (Ts) constituant avec la bobine (Ba) et le condensateur (Cd) et avec une diode (Dp) un montage hacheur série et d'autre part un interrupteur de hachage (Tp) constituant avec la bobine auxilaire (Bd ou Be) et le condensateur (Cd) et avec une diode (Ds) un montage hacheur parallèle.

4. Dispositif selon l'une quelconque des revendications précédentes, caractérisé par le fait qu'il comporte un premier interrupteur (T1) servant à contrôler la retombée rapide ainsi qu'un second interrupteur (T2) servant à contrôler la transition appel-maintien de l'électroaimant, ces deux interrupteurs (T1, T2) étant montés en série avec la bobine de commande (Ba).

5. Dispositif selon l'une quelconque des revendications précédentes, caractérisé par le fait qu'il comporte un troisième interrupteur (T3) coopérant avec une diode (D3) et servant au déclenchement

6. Dispositif selon l'une quelconque des revendications précédentes, caractérisé par le fait que le troisième transistor (T3) est monté en série avec la seconde bobine (Bd).

7. Dispositif selon l'une quelconque des revendications précédentes, caractérisé par le fait que les interrupteurs (Ts, Tp, T1, T2, T3) sont pilotés par le circuit à modulation de largeur d'impulsions intégré à un circuit contrôleur (CC).

8. Dispositif selon l'une quelconque des revendications précédentes, caractérisé par le fait qu'il comporte un redresseur (R) délivrant sur.deux sorties (a1, a2) un courant continu ou un courant alternatif redressé alimentant le circuit d'alimentation (A) des bobines (Ba et Bd).

9. Dispositif selon l'une quelconque des revendications précédentes, caractérisé par le fait qu'il comporte un capteur (Ci) de mesure du courant passant par la seconde bobine (Bd, Be), ce capteur étant relié au circuit contrôleur (CC).

10. Dispositif selon l'une quelconque des revendications précédentes, caractérisé par le fait qu'il comporte des diodes de roue libre (Da, Db) associées aux interrupteurs (T2,T1).
